Europäisches Patentamt

European Patent Office

Office européen des brevets

(19)

(11) Numéro de publication: **0 272 964**
**A1**

(12) **DEMANDE DE BREVET EUROPEEN**

(21) Numéro de dépôt: 87402709.7

(22) Date de dépôt: 01.12.87

(51) Int. Cl.⁴: **C 01 G 9/02**
**H 01 C 7/10**

(30) Priorité: 02.12.86 FR 8616803

(43) Date de publication de la demande:
29.06.88 Bulletin 88/26

(84) Etats contractants désignés: **AT BE DE GB SE**

(71) Demandeur: **COMPAGNIE EUROPEENNE DE COMPOSANTS ELECTRONIQUES LCC**
**50, rue Jean-Pierre Timbaud**
**F-92400 Courbevoie (FR)**

(72) Inventeur: **Djega-Mariadassou, Gerald**
**THOMSON-CSF SCPI 19, avenue de Messine**
**F-75008 Paris (FR)**

**Tran Huu, Vinh**
**THOMSON-CSF SCPI 19, avenue de Messine**
**F-75008 Paris (FR)**

**LaGrange, Alain**
**THOMSON-CSF SCPI 19, avenue de Messine**
**F-75008 Paris (FR)**

**Bureau-Tardy, Monique**
**THOMSON-CSF SCPI 19, avenue de Messine**
**F-75008 Paris (FR)**

(74) Mandataire: **Guérin, Michel et al**
**THOMSON-CSF SCPI 19, avenue de Messine**
**F-75008 Paris (FR)**

(54) Procédé de fabrication par coprécipitation de poudres dopées à base d'oxyde de zinc.

(57) L'invention concerne un procédé de fabrication par coprécipitation d'une poudre à base d'oxyde de zinc et comprenant un ou plusieurs ajouts. Le procédé comporte :
- une étape de préparation d'une ou de plusieurs solutions (A, B) par dissolution de quantités déterminées de sels des éléments entrant dans la composition de la poudre : zinc et ajout(s),
- une étape de préparation d'une solution tampon (2) présaturée par lesdits éléments, cette solution tampon possédant un pH déterminé de façon à faire précipiter les composés hydroxylés d'éléments correspondant aux éléments saturant la solution tampon,
- une étape pendant laquelle on ajoute à ladite solution tampon (2) les solutions (A, B), la chute du pH étant compensée par l'ajout d'une base et le volume de la solution tampon étant gardé constant par soutirage du liquide excédentaire,
- une étape pendant laquelle le précipité obtenu est traité pour obtenir ladite poudre.

FIG_1

SOLUTION B    SOLUTION A

POMPE    VIDE

## Description

### PROCEDE DE FABRICATION PAR COPRECIPITATION DE POUDRES DOPEES A BASE D'OXYDE DE ZINC

L'invention concerne un procédé de fabrication par coprécipitation de poudres à base d'oxyde de zinc destinées notamment à l'élaboration de varistances.

On connaît différents procédés de fabrication de poudres à base d'oxyde de zinc pour l'élaboration de varistances. L'un de ces procédés consiste à mélanger les poudres des oxydes ou de sels des éléments destinés à entrer dans la composition de la varistance (zinc, bismuth, antimoine, cobalt, manganèse, etc.) dans des proportions déterminées. Le mélange est ensuite homogénéisé le plus intimement possible, compressé et fritté. Cette méthode mécanique ne permet pas d'obtenir des grains très fins de dopes par rapport à l'oxyde de zinc et l'homogénéité de la poudre s'en ressent. Les méthodes chimiques permettent l'obtention de mélanges plus homogènes à l'échelle microscopique. Par précipitation ou coprécipitation partielle séparée, on peut obtenir, à partir de sels précurseurs dissous dans différentes solutions, des hydroxydes qui, à nouveau mélangés et traités thermiquement fournissent des poudres. L'homogénéité des poudes peut être meilleure que celles obtenues par le mélange mécanique direct des oxydes. Cependant, les caractéristiques électriques des varistances élaborées à partir de ces poudres montrent que ces méthodes sont encore insuffisantes du point de vue homogénéité et reproductibilité des produits obtenus. Une bonne homogénéité des poudres permettrait une meilleure distribution des barrières de potentiel aux joints de grains et une reproductibilité améliorée.

L'invention propose d'arriver à ces fins par la précipitation simultanée de tous les éléments destinés à constituer la poudre, avec une composition fixée à tout instant de la coprécipitation. La méthode proposée comprend l'ajout des éléments avec une compo sition globale donnée à une solution pré-saturée de tous ces éléments. Cette solution pré-saturée est tamponnée à un pH déterminé et la concentration totale en tampon est contôlée. Le pH a été calculé et est maintenu constant pendant toute la coprécipitation. Ceci peut être obtenu en maintenant constante la concentration totale en tampon de la solution saturée pendant toute l'opération de coprécipitation, de même que le volume total de cette solution.

L'invention a donc pour objet un procédé de fabrication par coprécipitation d'une poudre à base d'oxyde de zinc et comprenant un ou plusieurs ajouts, caractérisé en ce que le procédé comporte les étapes suivantes :
- 1ère étape : préparation d'une ou de plusieurs solutions par dissolution de quantités déterminées de sels des éléments entrant dans la composition de la poudre: zinc et ajout(s),
- 2ème étape : préparation d'une solution tampon pré-saturée par lesdits éléments, cette solution tampon possédant un pH déterminé de façon à faire précipiter les composés hydroxylés d'éléments correspondant aux éléments saturant la solution tampon,
- 3ème étape : ajout à ladite solution tampon des solutions préparées à la première étape, la chute du pH étant compensée par l'ajout d'une base et le volume de la solution tampon étant gardé constant par soutirage du liquide excédentaire,
- 4ème étape : le précipité obtenu au cours de la troisième étape est traité pour obtenir ladite poudre.

L'invention sera mieux comprise et d'autres avantages apparaîtront au moyen de la description qui va suivre, donnée à titre non limitatif, et des dessins annexés parmi lesquels :
- la figure 1 illustre le procédé de fabrication de poudres selon l'invention,
- la figure 2 est un diagramme tension-courant d'une varistance.

Lorsqu'on ajoute Zn (II) (élément zinc engagé dans un sel précurseur) à une solution aqueuse, on décompose l'eau qui est le réactif principal du procédé de coprécipitation selon la réaction :
$$Zn(II) + 2H_2O \rightarrow Zn(OH)_2 + 2H^+$$

On observe un précipité d'hydroxyde de zinc si le produit de solubilité est atteint et l'on crée deux protons qui modifient le pH global de la solution. On sait que les caractéristiques physico-chimiques de l'hydroxyde dépendent du pH. L'invention propose donc de stabiliser le pH du milieu de précipitation pour neutraliser les protons qui s'y créent. Le milieu de précipitation sera donc une solution aqueuse d'un mélange tampon dans laquelle on versera la solution contenant Zn(II). Il est avantageux de choisir un mélange tampon $NH_3/NH_4^+$. Il faut ajuster le pH et profiter du pouvoir tampon de la solution ammoniacale qui, si le pH du mélange tampon n'est pas trop éloigné de la valeur 9,2, conduit à une faible variation de pH pour une variation des concentrations de $NH_3$ et $NH_4^+$ relativement importante.

Le raisonnement présenté ci-après pour le zinc reste valable pour les ajouts, par exemple pour le cobalt, le manganèse, le nickel, le chrome, etc...

Pour éviter une variation de pH trop rapide lors de la coprécipitation, il faut que la concentration totale en tampon de la solution soit assez élevée par rapport aux concentrations en éléments à précipiter de la solution aqueuse ajoutée. Dans le cas de l'ammoniac, une concentration totale en ammoniac 1M est particulièrement avantageuse.

La correction du pH de la solution tampon peut être effectuée de plusieurs manières. On peut ajouter une base forte telle que la soude NaOH ou la potasse KOH. On peut aussi ajouter de l'ammoniac $NH_3$ si les éléments Na et K sont à proscrire puisqu'ils sont difficiles à évacuer de la poudre finale. C'est notamment le cas pour les poudres destinées aux varistances pour lesquelles ces éléments Na et K peuvent être nocifs. L'ajout de $NH_3$ très concentré empêche la coprécipitation des hydroxydes par effet de complexation. On préférera une solution de $NH_3$ de molarité 1M, la plus basique possible (c'est-à-dire avec le moins

d'ammonium $NH_4^+$ possible) et de pH voisin de 11.

Le cation $NH_3$ est un ligand pour les éléments Zn, Ni, Co, Mn et pour d'autres ajouts possibles. Cette complexation entre en compétition avec celle des ions hydroxyle, autre ligand des cations. En l'absence d'ammoniac et dans le cas du zinc par exemple, les ions $OH^-$ complexent $Zn^{2+}$ de façon significative pour un pH supérieur à 9 et peuvent conduire à une précipitation de l'hydroxyde. En revanche, en présence d'ammoniac, la complexation du zinc par ce ligand peut maintenir Zn en solution. Cette complexation est fonction de la concentration en $NH_3$ et de celle de $OH^-$ et dépend donc du pH. Il faut donc choisir un pH et une concentration en $NH_3$ de la solution tampon qui satisfassent à une précipitation simultanée optimale de tous les cations utilisés. Le choix du pH optimal est déduit de la variation de la solubilité conditionnelle des éléments, en fonction du pH, pour des concentrations en ammoniac fixées.

Parmi les dopes à introduire, le bismuth, le plomb et l'antimoine par exemple subissent une hydrolyse telle (précipitation des hydroxydes immédiate en phase aqueuse) qu'il convient de les complexer pour les mettre en solution avant de les coprécipiter. L'élément Bi peut être complexé par $Cl^-$ ou $NO_3^-$ ; l'élément Pb par $NO_3^-$ . L'élément Sb peut être complexé par l'ion tartrate ce qui conduit à introduire en faible quantité des ions $K^+$ .

Comme on le verra par la suite, il est préférable d'introduire le zinc et la plupart des dopes sous forme de nitrates. Dans ce cas, après coprécipitation, le solide mixte retient beaucoup de nitrate d'ammonium si on utilise un mélange tampon à base d'ammoniac. Ce nitrate d'ammonium s'élimine facilement par lavage à l'eau avant séchage et calcination.

## MISE EN OEUVRE DU PROCEDE

Le procédé de fabrication de poudres à base d'oxyde de zinc selon l'invention comporte les étapes suivantes :

- dissolution dans l'eau d'une quantité déterminée de sels d'éléments destinés à entrer dans la composition de la poudre pour constituer une solution A. A titre d'exemple et en fonction des dopes désirés, le zinc peut être introduit sous forme de nitrate ou de chlorure, l'antimoine sous forme d'antimonyl tartrate de potassium, le cobalt sous forme de nitrate, le manganèse sous forme de nitrate ou de chlorure, le nickel, le chrome et l'aluminium sous forme de nitrates.

- dissolution, dans le cas où l'on désire introduire l'élément bismuth ou l'élément plomb, d'un sel de bismuth ou d'un sel de plomb en quantité déterminée dans une solution d'acide nitrique 1M par exemple, pour constituer une solution B. Les sels de bismuth et de plomb peuvent être des nitrates.

- ajout à débit constant de la solution A et de la solution B le cas échéant à un volume donné de tampon maintenu à un pH déterminé conduisant à la précipitation des hydroxydes. Chaque élément à précipiter ayant un pH de précipitation propre, la solution tampon est saturée au préalable avec ces éléments par exemple à partir des mêmes sels que ceux qui ont servi à préparer les solutions A et B. Cette saturation permet d'obtenir immédiatement un précipité de composition imposée dès le début de la préparation. Cette composition est assurée tout le long de la précipitation.

- la chute du pH dans le milieu réactionnel est compensée par l'ajout continu d'une base.

- le volume de tampon est gardé constant par soutirage du liquide excédentaire pour conserver la saturation de la solution tampon.

- le précipité obtenu est filtré, lavé, séché et calciné sous air pour obtenir l'oxyde final.

Le procédé préfère réduire le nombre de solutions initiales (solutions A et B) au minimum mais on peut envisager de disposer d'autant de solutions qu'il y a d'éléments entrant dans la composition de la poudre.

Le contrôle du pH, son réajustement et l'opération consistant à garder constant le volume de tampon peuvent être des opérations entièrement automatisées grâce à un système de pompes. La mesure du pH peut être enregistrée ce qui permet de contrôler en permanence ce paramètre.

## OBTENTION D'UNE POUDRE I

Les conditions sont les suivantes :
- pH de précipitation : 8
- volume du tampon ammoniacal 1 800 ml, pour une concentration totale en ammoniac de 1M.
- base utilisée pour la correction du pH : $NH_3$ de molarité 1M pour un pH égal à 11.

La solution A comprend, dans 300ml d'eau :
- 220g de nitrate de zinc $Zn(NO_3)_2.6H_2O$ - 4,6g d'antimonyl tartrate de potassium $K(SbO)C_4H_4O_6.1/2H_2O$
- 2g de nitrate de cobalt $Co(NO_3)_2.6H_2O$
- 1g de nitrate de nickel $Ni(NO_3)_2.6H_2O$
- 2,2g de nitrate de chrome $Cr(NO_3)_3.9H_2O$
- 1,36g de nitrate de manganèse $Mn(NO_3)_2.4H_2O$

La solution B comprend 4,6g de nitrate de bismuth $Bi(NO_3)_3.5H_2O$ dans $110cm^2$ d'acide nitrique de molarité 1,5M.

La solution tampon est pré-saturée par les cations des éléments à précipiter sauf par le bismuth et l'antimoine puisque ces éléments précipitent pratiquement instantanément.

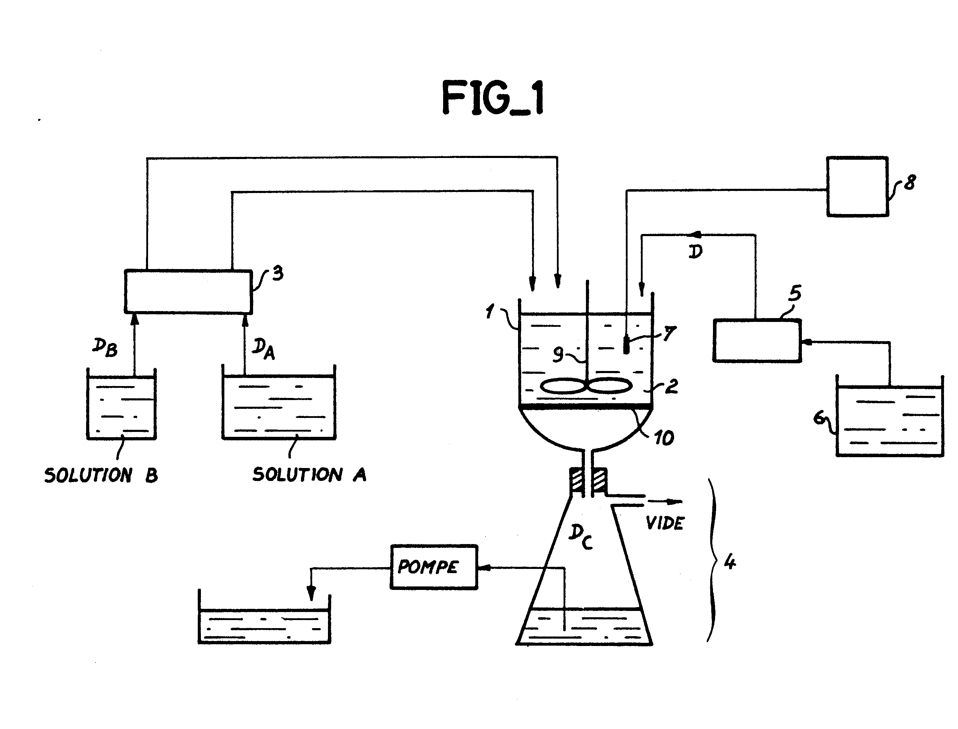

La figure 1 illustre le procédé de fabrication. Dans un grand verre fritté 1 de 4 litres équipé d'un agitateur 9, on introduit 1,81 de solution tampon ammoniacal 2 à pH 8. Cette solution est saturée avec des cations Zn, Co, Ni, Cr et Mn. Les solutions A et B sont ajoutées à la solution tampon 2 à l'aide d'une pompe péristaltique multicanaux 3 avec les débits respectifs $D_A$ et $D_B$. L'excès de liquide dans le verre fritté 1 est soutiré, grâce à un dispositif de vide désigné sous la référence générale 4, avec un débit $D_C$. Le pH du milieu réactionnel relevé par une électrode 7 reliée à un pH-mètre 8, est maintenu constant en ajoutant de l'ammoniac 1M de pH 11 soutiré d'un réservoir 6 grâce à une autre pompe péristaltique 5 avec un débit D. Ces débits sont réglés de telle façon que :

$D_C = D_A + D_B + D$

A titre d'exemple, on peut avoir :

$D_C = 25,2 \ cm^3/mn$

$D_A = 3,8 \ cm^3/mn$

$D_B = 1 \ cm^3/mn$

$D = 20,4 \ cm^3/mn$

Le précipité obtenu est recueilli sur le filtre 10 puis est filtré sous vide, lavé avec 2 litres d'eau distillée pour éliminer les ions solubles indésirables. Il est ensuite séché : d'abord à température ambiante pendant 24 heures, puis à l'étuve à 120°c pendant 8 heures. Le produit récupéré est broyé puis calciné sous air à 700°C avec une vitesse de chauffe de 2°C/mn. Il est maintenu à cette température pendant le temps nécessaire pour transformer les hydroxydes en oxydes. Un refroidissement lent sous air termine le processus de préparation.

## OBTENTION DE POUDRES I bis et I ter

Les conditions d'obtention de ces poudres et leurs compositions sont exactement les mêmes que pour la poudre I. Ces poudres ont été élaborées pour estimer la reproductibilité des compositions par la méthode selon l'invention.

## OBTENTION D'UNE POUDRE II

Le mode opératoire et les quantités sont identiques à ceux annoncés ci-dessus mais le précipité obtenu subit un "mûrissement" dans la solution tampon pendant 72 heures avant d'être filtré, séché et calciné.

## OBTENTION DE POUDRES III et III bis

Le mode opératoire est le même que précédemment. La proportion des ajouts déjà mentionnés est également la même, mais on introduit en faible quantité deux nouveaux éléments : l'aluminium et le plomb. L'aluminium est introduit sous forme de nitrate dans la solution A et le plomb également sous forme de nitrate mais dans la solution B. La solution tampon a été pré-saturée éaglement par ces éléments.

Le tableau 1 placé en fin de description décrit la composition des poudres ci-dessus qui peuvent être comparées à la composition nominale théorique. Les proportions des éléments autres que le zinc dans les poudres sont données en moles d'élément pour 100 g de poudre. L'analyse chimique des poudres a été faite par absorption atomique après dissolution de la poudre en milieu acide.

Les tableaux 2, 3 et 4 placés en fin de description donnent les principales caractéristiques physiques et électriques des poudres dont l'obtention a été décrite ci-dessus, en fonction des conditions de frittage. Les poudres référencées a ont été frittées dans les conditions suivantes : montée en température 200°C/h, palier à 1190°C pendant 1 heure, descente à raison de 200°C/h. La poudre référencée b a été frittée dans les conditions suivantes : montée en température 200°C/h, palier à 1250°C pendant 1 heure, descente à raison de 200°C/h. La poudre référencée b' diffère de la poudre b pour la température de palier qui est de 1200°C. La poudre référencée c a été frittée dans les conditions suivantes : montée en température 200°C/h, palier à 1200°C pendant 1 h, descente à raison de 70°C/h.

Le tableau 2 donne les valeurs de surface spécifique $S_{BET}$ des poudres en $m^2/g$ ainsi que la densité des poudres cuites.

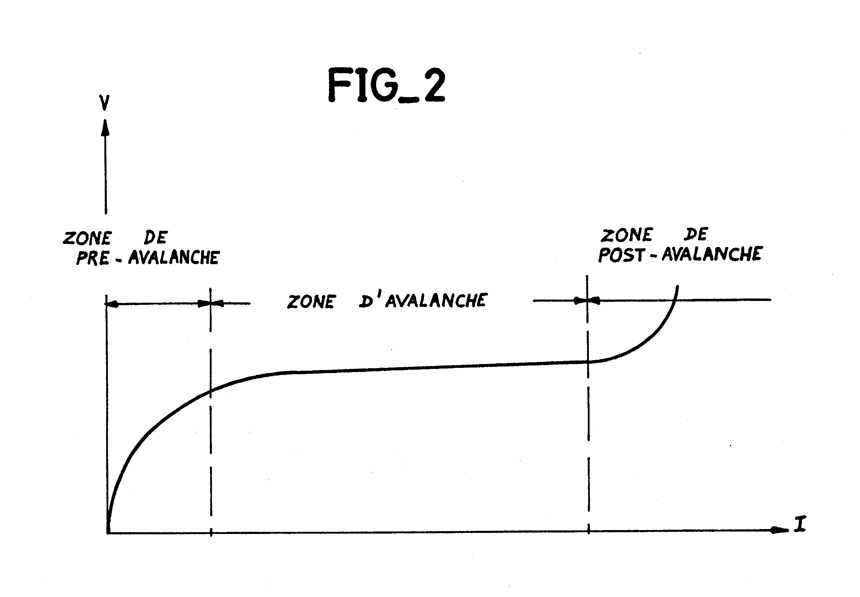

Le tableau 3 caractérise le comportement sous tension de varistances élaborées à partir des poudres ci-dessus. L'allure générale de la caractéristique tension-courant d'une varistance est représentée par la figure 2. La courbe de ce diagramme comporte trois parties indiquées sur la figure 2. $V_o$ (tableau 3) représente la tension continue par mm d'épaisseur de varistance pour 1 mA de courant la traversant. Les autres colonnes du tableau 3 concernent les variations de tension en fonction des variations de courant. Le rapport $V_{1mA}/V_{10\mu A}$ caractérise le niveau de courant de fuite. Le rapport $V_{10A}/V_{1mA}$ caractérise le niveau d'écrêtage à 10A. Les valeurs sont données en fonction de la nature du dépôt conducteur sur les faces des varistances pour constituer des électrodes. Ce dépôt peut être un alliage d'indium et de gallium ou une pâte à base d'argent. Dans ce dernier cas, la pâte peut contenir 70% d'argent, le reste étant constitué d'un fondant minéral et de véhicules organiques. La pâte est alors déposée sur les céramiques issues de frittage et le tout est traité à 620°C dans un four à passage dans les conditions suivantes : durée totale du cycle environ 35mn, palier d'environ 3 mn à 620°C. Les valeurs apparaissant dans le tableau 3 sont des moyennes de relevés concernant plusieurs échantillons.

Le talbeau 4 caractérise la tenue aux chocs de courant. Les valeurs indiquées sont des valeurs moyennes de relevés concernant plusieurs échantillons. Le rapport $V_{100A}/V_{1mA}$ caractérise le niveau d'écrêtage correspondant à un courant transitoire de 100 A. Les mesures sont faites à l'aide d'une onde de courant du type 8 X 20 µs. $\Delta V/V_{1mA}$ représente en pour cent la dérive relative de $V_{1mA}$ après un choc de courant I correspondant à la tension V.

4

## TABLEAU 1

| Poudre | COMPOSITION (moles d'élément/100 g de poudre) X $10^3$ | | | | | | | |
|---|---|---|---|---|---|---|---|---|
| | Bi | Sb | Co | Mn | Ni | Cr | Al | Pb |
| Composition théorique | 16 | 23 | 12 | 9 | 6 | 9 | | |
| I | 16 | 23 | 9 | 8 | 6 | 10 | — | — |
| I bis | 16 | 22 | 11 | 9 | 6 | 9 | — | — |
| I ter | 16 | 22 | 10 | 8 | 6 | 9 | — | — |
| II | 12 | 21 | 7 | 13 | 6 | 9 | — | — |
| III | 16 | 22 | 11 | 9 | 6 | 9 | 0,04 | 0,06 |
| III bis | 16 | 22 | 11 | 9 | 6 | 9 | 0,04 | 0,06 |

TABLEAU  2

| Poudre | | $S_{BET}$ | Densité |
|---|---|---|---|
| I | a | 8 | 5,27 |
| | b' | 8 | 5,26 |
| | c | 8· | 5,24 |
| I bis | a | — | 5,30 |
| | b | — | 5,28 |
| | c | — | 5,27 |
| I ter | a | — | 5,23 |
| | b | — | 5,29 |
| | c | — | 5,25 |
| II | a | 7,5 | 5,12 |
| | b | 7,5 | 5,07 |
| III | a | — | 5,32 |
| | b | — | 5,30 |
| | c | — | 5,30 |
| III bis | a | — | 5,28 |
| | b | — | 5,27 |
| | c | — | 5,26 |

## TABLEAU 3

| Poudre | | $V_o$ (V/mm) | | $V_{1mA}/V_{10\mu A}$ | | $V_{10A}/V_{1mA}$ | |
|---|---|---|---|---|---|---|---|
| | | In-Ga | Ag | In-Ga | Ag | In-Ga | Ag |
| I | a | 216 | 214 | 1,08 | 1,09 | 1,60 | 1,60 |
| | b' | 2 26 | 21 I | 1,08 | 1,09 | 1,66 | 1,59 |
| | c | 208 | 2 07 | 1,08 | 1,11 | 1,66 | 1,63 |
| I bis | a | 210 | 209 | 1,08 | 1,085 | 1,42 | 1,43 |
| | b | 219 | 209 | 1,075 | 1,075 | 1,41 | 1,41 |
| | c | 211 | 206 | 1,075 | 1,07 | 1,42 | 1,42 |
| I ter | a | 2 34 | 228 | 1,08 | 1,085 | 1,52 | 1,46 |
| | b | 240 | 237 | 1,08 | 1,085 | 1,51 | 1,48 |
| | c | 228 | 228 | 1,08 | 1,085 | 1,57 | 1,56 |
| II | a | 220 | 228 | 1,09 | 1,08 | 1,59 | 1,58 |
| | b | 195 | 188 | 1,09 | 1,09 | 1,71 | 1,68 |
| III | a | 282 | 27 5 | 1,07 | 1,065 | 1,39 | 1,39 |
| | b | 283 | 289 | 1,22 | 1,065 | 1,40 | 1,40 |
| | c | 279 | 279 | 1,07 | 1,065 | 1,40 | 1,42 |
| III bis | a | 265 | 259 | 1,07 | 1,06 | 1,44 | 1,38 |
| | b | 27 7 | 266 | 1,07 | 1,06 | 1,40 | 1,38 |
| | c | 264 | 253 | 1,07 | 1,07 | 1,42 | 1,39 |

## TABLEAU 4

| Poudre | | $V_{100A}/V_{1mA}$ | I (A) | V (V) | $\Delta V/V_{1mA}$ (%) |
|---|---|---|---|---|---|
| I | a | 2,17 | 725 | 1 000 | - 9,3 |
| | b' | 2,13 | 845 | 900 | - 10,1 |
| | c | 2,23 | 725 | 960 | - 7,1 |
| I bis | a | 1,73 | 1 090 | 685 | - 15,3 |
| | b | 1,72 | 1 070 | 695 | - 17,3 |
| | c | 1,75 | 1 060 | 684 | - 11,5 |
| I ter | a | 1,86 | 925 | 850 | - 4,6 |
| | b | 1,89 | 855 | 890 | - 3,8 |
| | c | 2,00 | 745 | 985 | - 3,4 |
| II | a | 2,04 | 822 | 920 | - 16 |
| | b | 2,34 | 795 | 925 | - 19 |
| III | a | 1,54 | 1 005 | 765 | - 5,7 |
| | b | 1,67 | 960 | 798 | - 5,9 |
| | c | 1,70 | 972 | 780 | - 4,8 |
| | a | 1,64 | 973 | 773 | - 4,6 |
| | b | 1,63 | 996 | 757 | - 3,8 |
| | c | 1,65 | 1 020 | 747 | - 3,4 |

## Revendications

1. Procédé de fabrication par coprécipitation d'une poudre à base d'oxyde de zinc et comprenant un ou plusieurs ajouts, caractérisé en ce que le procédé comporte les étapes suivantes :
- 1ère étape : préparation d'une ou de plusieurs solutions par dissolution de quantités déterminées de sels des éléments entrant dans la composition de la poudre : zinc et ajout(s),
- 2ème étape : préparation d'une solution tampon pré-saturée par lesdits éléments, cette solution tampon possédant un pH déterminé de façon à faire précipiter les composés hydroxylés d'éléments correspondant aux éléments saturant la solution tampon,
- 3ème étape : ajout à ladite solution tampon des solutions préparées à la première étape, la chute du pH étant compensée par l'ajout d'une base et le volume de la solution tampon étant gardé constant par soutirage du liquide excédentaire,
- 4ème étape : le précipité obtenu au cours de la troisième étape est traité pour obtenir ladite poudre.

2. Procédé selon la revendication 1, caractérisé en ce que le traitement de la quatrième étape comporte des opérations de filtrage, de lavage, de séchage et de calcination sous air.

3. Procédé selon l'une des revendications 1 ou 2, caractérisé en ce que le sel de zinc est du nitrate ou du chlorure.

4. Procédé selon l'une quelconque des revendications 1 à 3, caractérisé en ce que les ajouts possibles font partie du groupe constitué par l'antimoine, le cobalt, le manganèse, le nickel, le chrome, le bismuth, le plomb et l'aluminium.

5. Procédé selon la revendication 4, caractérisé en ce que le sel d'antimoine est de l'antimonyl tartrate de potassium.

6. Procédé selon la revendication 4, caractérisé en ce que le sel de cobalt est du nitrate.

7. Procédé selon la revendication 4, caractérisé en ce que le sel de manganèse est du nitrate ou du chlorure.

8. Procédé selon la revendication 4, caractérisé en ce que le sel de nickel est du nitrate.

9. Procédé selon la revendication 4, caractérisé en ce que le sel de chrome est du nitrate.

10. Procédé selon la revendication 4, caractérisé en ce que le sel de bismuth est du nitrate.

11. Procédé selon la revendication 4, caractérisé en ce que le sel d'aluminium est du nitrate.

12. Procédé selon la revendicatin 4, caractérisé en ce que le sel de plomb est du nitrate.

13. Procédé selon l'une quelconque des revendications 1 à 12, caractérisé en ce que la base de la solution tampon est un mélange $NH_3/NH_4^-$ .

14. Procédé selon la revendication 13, caractérisé en ce que, la base ajoutée à la solution tampon pour compenser la chute du pH est de l'ammoniac.

15. Procédé selon l'une des revendications 1 ou 2, caractérisé en ce que :
- lors de la première étape, on prépare une première solution (A) pour laquelle les sels sont constitués par du nitrate de zinc, de l'antimonyl tartrate de potassium, du nitrate de cobalt, du nitrate de manganèse, du nitrate de nickel et du nitrate de chrome, et une seconde solution (B) obtenue par dissolution dans l'acide nitrique d'une quantité déterminée de nitrate de bismuth,
- lors de la seconde étape, on prépare une solution tampon (2) pré-saturée, le tampon étant constitué par un mélange $NH_3/NH_4^-$ ,
- lors de la troisième étape, la chute du pH est compensée par l'ajout continu d'ammoniac.

16. Procédé selon la revendication 15, caractérisé en ce que, la poudre devant coomprendre en outre comme ajouts de l'aluminium et du plomb, l'aluminium est introduit sous forme de nitrate dans la première solution (A), la plomb est introduit sous forme de nitrate dans la seconde solution (B), la solution tampon (2) étant également pré-saturée par les éléments aluminium et plomb.

# FIG_1

SOLUTION B

SOLUTION A

$D_B$

$D_A$

$D_C$

VIDE

POMPE

D

# FIG_2

ZONE DE PRE - AVALANCHE

ZONE DE POST - AVALANCHE

ZONE D'AVALANCHE

V

I

| Office européen des brevets | RAPPORT DE RECHERCHE EUROPEENNE | Numero de la demande |
| --- | --- | --- |

EP 87 40 2709

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
| --- | --- | --- | --- |
| X | EP-A-0 097 923 (TOKYO SHIBAURA DENKI K.K.) <br> * Revendications 1-4; page 6, lignes 16-20; page 7, ligne 11 - page 8, ligne 18 * <br> --- | 1-4,6-10,13 | C 01 G 9/02 <br> H 01 C 7/10 |
| X | CHEMICAL ABSTRACTS, vol. 105, no. 10, septembre 1986, page 167, résumé no. 81724a, Columbus, Ohio, US; & JP-A-61 86 421 (SUMITOMO ALUMINIUM SMELTING CO., LTD) 01-05-1986 <br> * En entier * <br> --- | 1-3,11 | |
| A | DE-A-2 910 841 (LICENTIA PATENT-VERWALTUNGS-GmbH) <br> * Revendications 10,11,14 * <br> ----- | 1,5 | |

|  |
| --- |
| DOMAINES TECHNIQUES RECHERCHIES (Int. Cl.4) |
| C 01 G <br> H 01 C |

Le présent rapport a été établi pour toutes les revendications

| Lieu de la recherche | Date d'achèvement de la recherche | Examinateur |
| --- | --- | --- |
| LA HAYE | 03-03-1988 | DECANNIERE L.J. |